Europäisches Patentamt

European Patent Office

Office européen des brevets

(19)

(11) Veröffentlichungsnummer: **0 082 933**
**B1**

(12) ## EUROPÄISCHE PATENTSCHRIFT

(45) Veröffentlichungstag der Patentschrift:
**29.01.86**

(51) Int. Cl.⁴: **F 15 B 15/20**

(21) Anmeldenummer: **82109591.6**

(22) Anmeldetag: **18.10.82**

(54) **Einrichtung zum Erfassen der Kolbenstellung eines Zylinders.**

(30) Priorität: **14.12.81 DE 3194516**

(43) Veröffentlichungstag der Anmeldung:
**06.07.83 Patentblatt 83/27**

(45) Bekanntmachung des Hinweises auf die Patenterteilung:
**29.01.86 Patentblatt 86/5**

(84) Benannte Vertragsstaaten:
**DE FR GB IT**

(56) Entgegenhaltungen:
**CH - A - 575 115**
**DE - A - 1 965 892**
**DE - A - 2 407 989**
**DE - A - 2 441 163**
**DE - B - 2 636 586**
**DE - U - 7 223 173**
**US - A - 2 417 097**
**US - A - 2 424 766**

(73) Patentinhaber: **WABCO Westinghouse Steuerungstechnik GmbH & Co.,**
**Bartweg 13 Postfach 91 12 70, D-3000 Hannover 91 (DE)**

(72) Erfinder: **Dreschau, Rudolf, Am Kalkwerk 12,**
**D-3257 Springe (DE)**
Erfinder: **Göttling, Helmut, Fuhrenkamp 3,**
**D-3004 Isernhagen (DE)**
Erfinder: **Brausfeld, Walter, Hannoversche Strasse 101,**
**D-3000 Hannover 61 (DE)**

(74) Vertreter: **Schrödter, Manfred, WABCO Westinghouse Fahrzeugbremsen GmbH Am Lindener**
**Hafen 21 Postfach 91 12 80, D-3000 Hannover 91 (DE)**

## Beschreibung

Die Erfindung betrifft eine Einrichtung zum Erfassen der Kolbenstellung eines Zylinders gemäss dem Oberbegriff des Patentanspruchs 1.

Aus der DE-A-2 407 989 ist es bekannt, zur Erfassung der Kolbenstellung eines Zylinders, aussen am Zylinder zwei induktiv arbeitende elektrische Schaltglieder anzuordnen. Der Zylinder ist aus nichtferromagnetischem Material gefertigt und der Kolben besteht wenigstens zum Teil aus ferromagnetischem Werkstoff.

Bei einem Hub des Kolbens wird immer dann ein Signal erzeugt, wenn der Kolben in den Bereich eines der beiden auf dem Zylindermantel befestigten elektrischen Schaltglieder gelangt bzw. an einem dieser beiden elektrischen Schaltglieder vorbeibewegt wird.

Diese bekannte Einrichtung hat den Nachteil, dass lediglich zwei Positionen des Kolbens, im allgemeinen die Endlagen, erfasst werden können. Ein weiterer Nachteil dieser Einrichtung ist noch darin zu sehen, dass die eine Induktionsspule aufweisenden elektrischen Schaltglieder besondere Halterungen für die Spulen benötigen.

Mittels einer aus der DE-A-2 441 163 bekannten Einrichtung ist es möglich, verschiedene Kolbenstellungen zu erfassen. Bei dieser Einrichtung ist konzentrisch zum Kolben ein hohlzylinderförmiges Rohr im Zylinderraum angeordnet, welches fest mit dem Kolben verbunden ist und als Dämpfungsrohr für eine ebenfalls im Zylinder vorgesehene, in das Dämpfungsrohr hineinragende Messspulenanordnung ausgebildet ist. Bei einer Hubbewegung des Kolbens taucht die Messspulenanordnung in das mit dem Kolben verbundene Dämpfungsrohr ein, wodurch eine Änderung der Induktivität der Spule hervorgerufen wird. Diese Änderung der Induktivität bewirkt beim Anlagen einer konstanten Wechselspannung an die Spule eine Stromänderung, die zur Anzeige oder Regelung der Position des Kolbens benutzt wird.

Diese bekannte Einrichtung bietet den Vorteil, eine sehr genaue Positionsbestimmung des Kolbens durchführen zu können, ist in ihrem Aufbau jedoch aufwendig und benötigt zur Aufnahme der Messspulenanordnung sowie des am Kolben befestigten Dämpfungsrohres relativ viel Raum.

Der Erfindung liegt deshalb die Aufgabe zugrunde, eine Einrichtung der eingangs genannten Art zu schaffen, die einfach in ihrem Aufbau und kompakt ausgebildet ist und es ermöglicht, mehrere verschiedene Kolbenpositionen erfassen zu können.

Diese Aufgabe wird mit der im Patentanspruch 1 angegebenen Erfindung gelöst. Weiterbildungen und vorteilhafte Ausgestaltungen der Erfindung werden in den Unteransprüchen angegeben.

Die erfindungsgemässe Einrichtung bietet neben einfachem Aufbau insbesondere den Vorteil, dass wegen der Ausbildung des Zylinderrohres als Spulenträger und wegen der Verwendung des Kolbens bzw. der Kolbenstange als Spulenkern kein zusätzlicher für den Arbeitshub des Kolbens nicht nutzbarer Raum beansprucht bzw. kein den Zylinder vergrössernder Raum benötigt wird. Je nachdem, ob die gesamte nutzbare Länge des Zylinders als Spulenträger oder nur ein Teilbereich des Zylinders als Spulenträger benutzt wird, kann auf einfache Art und Weise die Position des Kolbens innerhalb eines vorbestimmbaren zu überwachenden Bereiches erfasst werden.

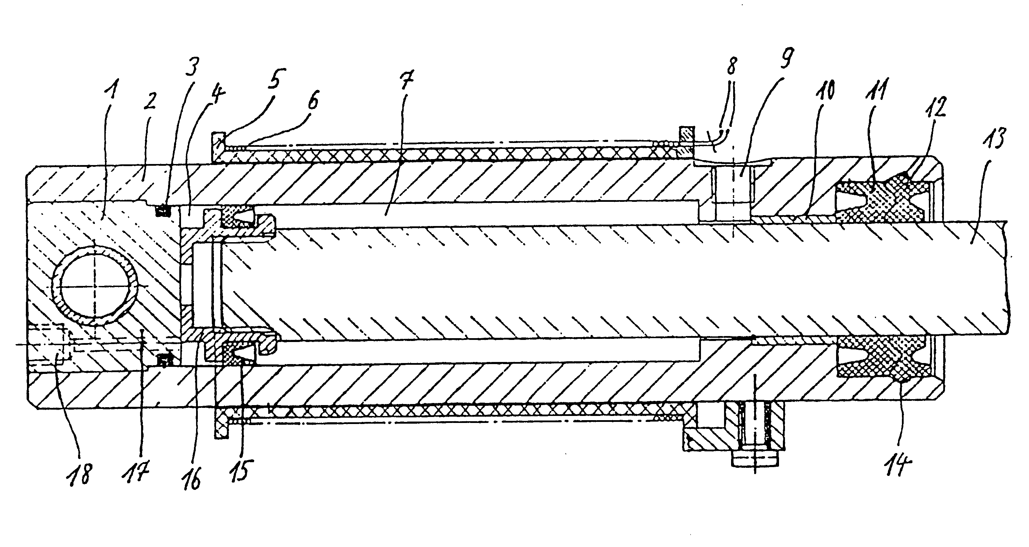

Anhand der Abbildung wird ein Ausführungsbeispiel der Erfindung nachstehend näher erläutert.

Die Abbildung zeigt einen doppeltwirkenden Arbeitszylinder mit einer Induktionsspulenanordnung, wobei das Zylinderrohr als Spulenkörper und die Kolbenstange als Spulenkern ausgebildet sind.

In einem Zylindergehäuse, welches aus einem aus Kunststoff gefertigen Zylinderrohr 2 und einem Zylinderdeckel 1 besteht, ist ein mit einem Dichtelement 15 versehener Kolben 16 angeordnet, der den Zylinderraum in eine kolbenstangenseitige erste Druckmittelkammer 7 und eine der kolbenstangenseitigen Druckmittelkammer 7 gegenüber auf der anderen Seite des Kolbens 16 angeordnete zweite Druckmittelkammer 4 unterteilt. Auf dem Umfang des Zylinderdeckels 1 ist ein Dichtring 3 angeordnet, welcher den Zylinderdeckel 1 gegen das Zylindergehäuse abdichtet. Der Kolben 16 ist mit einer aus Metall bestehenden Kolbenstange 13 verbunden. Die Kolbenstange 13 wird durch eine in der dem Zylinderdeckel 1 gegenüberliegenden Stirnwand des Zylindergehäuses angeordnete Öffnung aus dem Zylinder herausgeführt. Zur Führung der Kolbenstange 13 ist in der Öffnung eine die Kolbenstange 13 umschliessende Führungshülse 10 vorgesehen.

Ein auf der der Druckmittelkammer 7 abgewandten Seite der Führungshülse 10 angeordnetes ringförmiges Dichtelement 11 umschliesst die Kolbenstange 13 und dichtet diese gegen das Zylindergehäuse ab.

Ein weiteres ringförmiges Dicht- und Führungselement 12 ist dem ersten Dichtelement 11 nachgeschaltet. Das Dicht- und Führungselement 12 weist auf seinem Umfang eine umlaufende Wulst 14 auf, die in eine entsprechend ausgebildete Nut in der Zylindergehäusewandung eingreift und das Dichtelement 11 gegen axiales Verschieben sichert.

Über einen im Zylinderdeckel 1 vorgesehenen Kanal 17 und einen mit diesem verbundenen ersten Druckmittelanschluss 18 ist die zweite Druckmittelkammer 4 mit einer Druckmittelquelle verbindbar. Über einen zweiten Druckmittelanschluss 9 ist die erste Druckmittelkammeer 17 ebenfalls mit der Druckmittelquelle verbindbar.

Auf dem Umfang des Zylinderrohres 2 ist ein Spulenträger 5 angeordnet, der zur Aufnahme einer den Zylinder umgebenden Spulenwicklung 6 dient. Die Spulenwicklung 6 weist Anschlüsse 8 auf, die mit einer Spannungsquelle sowie mit einer nicht dargestellten Auswerte- und Schalteinrichtung verbunden sind.

Es ist auch möglich, die Spulenwicklung lediglich auf einem Teil des Umfangs des Zylinderrohres vorzusehen.

Von Vorteil ist es, die Spulenwicklung mit einem als Abschirmung dienenden Metallmantel zu umgeben.

## Patentansprüche

1. Einrichtung zum Erfassen der Kolbenstellung eines Zylinders, welcher aus einem Zylinderrohr (2) mit wenigstens einer Stirnwand sowie einem in Richtung seiner Längsachse verschiebbar im Zylinderrohr (2) angeordneten Kolben (16) besteht, mit folgenden Merkmalen:

a) der Kolben (16) und/oder eine gegebenenfalls mit dem Kolben verbundene Kolbenstange (13) besteht wenigstens teilweise aus einem magnetisierbaren Werkstoff;

b) das Zylinderrohr (2) besteht wenigstens in dem Bereich, welcher vom Kolben (16) und/oder von der Kolbenstange (13) durchfahren wird, aus einem nicht magnetisierbaren Werkstoff;

c) der Kolben (16) und/oder die Kolbenstange (13) wirkt mit einer aussen am Zylinder (2) angeordneten Induktionsspule (5, 6) zusammen, derart, dass eine Veränderung der Kolbenstellung eine Änderung der Induktivität der Spule bewirkt;

dadurch gekennzeichnet, dass das Zylinderrohr (2) auf wenigstens einem Teil seiner axialen Erstreckung auf seinem Umfang von der Spulenwicklung (6) der Induktionsspule (5, 6) umgeben ist.

2. Einrichtung nach Anspruch 1, dadurch gekennzeichnet, dass der vom Kolben (16) bzw. von der Kolbenstange (13) zu durchfahrende Bereich des Zylinderrohres (2) als Spulenkörper ausgebildet ist.

3. Einrichtung nach Anspruch 1, dadurch gekennzeichnet, dass die Spulenwicklung von einem als Abschirmung dienenden Metallmantel umschlossen ist.

4. Einrichtung nach Anspruch 1, dadurch gekennzeichnet, dass das Zylinderrohr (2) wenigstens in dem Bereich, welcher vom Kolben (16) bzw. von der Kolbenstange (13) durchfahren wird, aus Kunststoff besteht.

## Claims

1. Device for detecting the piston position of a cylinder which comprises a cylinder tube (2) having at least one end wall and a piston (16) arranged in the cylinder tube (2) so that it can be displaced in the direction of its longitudinal axis, having the following features:

a) the piston (16) and/or piston rod (13) optionally connected to the piston consists, at least partially, of a magnetisable material;

b) the cylinder tube (2) consists, at least in the region through which the piston (16) and/or the piston rod (13) travel(s), of a non-megnetisable material;

c) the piston (16) and/or the piston rod (13) so cooperate(s) with an inductance coil (5, 6) arranged externally of the cylinder (2) that a change in the piston position brings about a change in the inductance of the coil;

characterised in that the cylinder tube (2) is surrounded over at least a portion of its axial extent on its periphery by the coil winding (6) of the inductance coil (5,6).

2. Device according to claim 1, characterised in that the region of the cylinder tube (2) to be travelled through by the piston (16) or the piston rod (13) is constructed as a coil former.

3. Device according to claim 1, characterised in that the coil winding is enclosed by a metal casing serving as screen.

4. Device according to claim 1, characterised in that the cylinder tube (2) consists, at least in the region through wich the piston (16) or the piston rod (13) travels, of plastics material.

## Revendications

1. Dispositif de détection de la position du piston d'un cylindre qui est composé d'un tube de cylindre (2) muni d'au moins une paroi de fond, ainsi que d'un piston (16) disposé dans le tube (2) du cylindre et mobile en translation parallèlement à sa direction longitudinale, ce dispositif présentant les caractéristiques suivantes:

a) le piston (16) et/ou une tige de piston (13) éventuellement solidaire du piston, est ou sont réalisé(s) au moins partiellement en une matière magnétisable;

b) le tube (2) du cylindre est fait d'une matière non magnétisable au moins dans la région qui est parcourue par le piston (16) et/ou par la tige de piston (13);

c) le piston (16) et/ou la tige de piston (13) coopère(nt) avec une bobine d'induction (5, 6) agencée extérieurement sur le cylindre (2) de manière qu'une variation de la position du piston détermine une variation de l'inductivité de la bobine;

caractérisé en ce que le tube (2) du cylindre est entouré sur au moins une partie de son extension axiale et sur sa périphérie par un enroulement de bobine (6) appartenant à la bobine d'induction (5, 6).

2. Dispositif selon la revendication 1, caractérisé en ce que la région du tube (2) du cylindre qui est parcourue par le piston (16) ou par la tige de piston (13) constitue un corps de bobine.

3. Dispositif selon la revendication 1, caractérisé en ce que l'enroulement de la bobine est entouré d'une gaine métallique servant de blindage.

4. Dispositif selon la revendication 1, caractérisé en ce que le tube (2) du cylindre est réalisé en matière plastique au moins dans la région qui est parcourue par le piston (16) ou par la tige de piston (13).